# FASCICULE DE BREVET EUROPEEN

(11) **EP 3 800 384 B1**
(45) Date de publication et mention de la délivrance du brevet: **20.12.2023**
(21) Numéro de dépôt: 20196728.8
(22) Date de dépôt: 17.09.2020
(51) Int. Cl.: F16J 15/10, B64C 1/12, B64C 3/26, B64C 7/00

(54) **ASSEMBLAGE COMPORTANT UNE STRUCTURE, DEUX PANNEAUX ET UN SYSTEME D'ETANCHEITE**
BAUGRUPPE MIT EINER STRUKTUR, ZWEI PLATTEN UND EINEM DICHTUNGSSYSTEM
ASSEMBLY COMPRISING A STRUCTURE, TWO PANELS AND A SEALING SYSTEM

(30) Priorité: 01.10.2019 FR 1910853
(43) Date de publication de la demande: 07.04.2021
(73) Titulaire: AIRBUS OPERATIONS (S.A.S.), 31060 Toulouse (FR)
(72) Inventeur: BRAS, William, 31060 TOULOUSE Cedex 9 (FR)
(74) Mandataire: Sarraméa, Claude

(56) Documents cités:
- EP-A1- 0 669 430
- EP-A1- 2 059 714
- EP-B1- 2 059 714
- JP-A- 2006 281 664
- US-A- 3 832 820
- US-A- 4 556 592
- US-A- 5 014 934

## Description

### DOMAINE TECHNIQUE

La présente invention concerne un assemblage comportant une structure, deux panneaux et un système d'étanchéité qui assure l'étanchéité entre les deux panneaux, un procédé de réalisation d'un tel assemblage, ainsi qu'un aéronef comportant un tel assemblage.

### ETAT DE LA TECHNIQUE ANTERIEURE

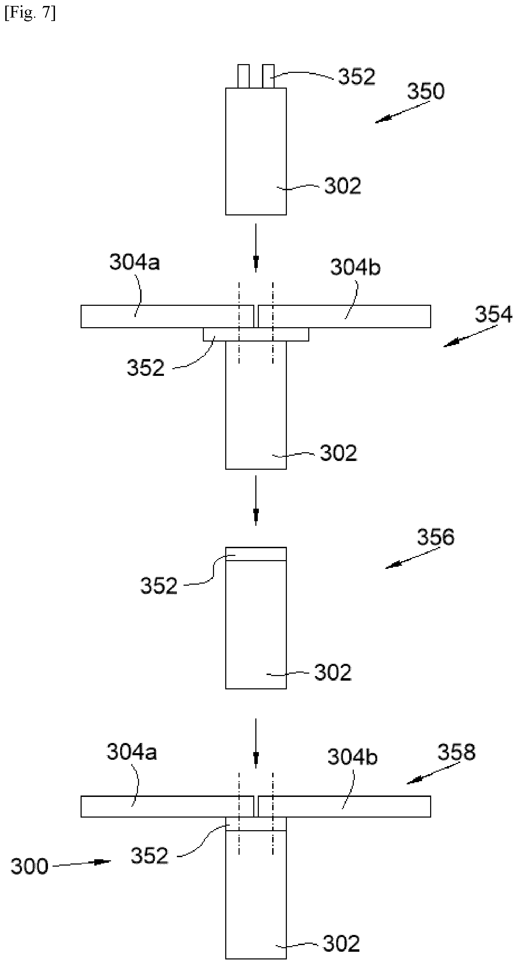

Un aéronef comporte classiquement une structure sur laquelle est fixée une pluralité de panneaux. La Fig. 7 montre un procédé de réalisation d'un assemblage 300 de l'état de la technique qui comporte une structure 302 et deux panneaux 304a-b.

Le procédé comporte :
- une étape de préparation 350 au cours de laquelle des cordons de joint 352 sont déposés sur la structure 302, par exemple du joint silicone,
- une première étape d'assemblage 354 au cours de laquelle les panneaux 304a-b sont fixés à la structure 302 en comprimant les cordons de joint 352, où la fixation est réalisée par exemple par des systèmes de vis-écrou,
- une étape de polymérisation au cours de laquelle les cordons de joint 352 ainsi comprimés sont polymérisés,
- une étape de retrait 356 au cours de laquelle les panneaux 304a-b sont retirés, où la bonne répartition du joint 352 est vérifiée et où le joint 352 en excès est retiré, et
- une deuxième étape d'assemblage 358 au cours de laquelle les panneaux 304a-b sont à nouveau fixés à la structure 302 en prenant le joint 352 en sandwich.

Si un tel procédé est satisfaisant, il présente cependant quelques inconvénients car il nécessite la fixation des panneaux 304a-b pour conformer le joint 352 ce qui peut amener à un grippage des éléments de visserie, en outre lorsqu'un panneau doit être changé, il est nécessaire de changer également le joint, et enfin, du téflon ou un démoulant liquide doit être intégré aux panneaux pour limiter l'adhérence du joint.

En outre, la polymérisation est réalisée tandis que les panneaux 304a-b sont toujours en place ce qui pose des problèmes d'accessibilité pour effectuer d'autres opérations d'assemblage dans cette zone.

Le document EP0669430 décrit une structure de connexion de panneau pourvue d'au moins un élément de support constitué d'une partie intérieure plate opposée à un élément de montage de manière à y être jointes de manière fixe, de parties latérales s'étendant depuis les deux extrémités de la partie intérieure dans la direction opposée de l'élément de montage, et de parties pliées formées en pliant les parties d'extrémité libres des parties latérales dans la direction vers l'intérieur de sorte pour définir une ouverture entre eux. La structure comporte de plus un assemblage de panneau ayant une section transversale en forme d'OMEGA sensiblement inversée et adapté pour être monté sur les parties pliées et au moins une paire de panneaux ayant les deux parties d'extrémité pourvues de parties élastiques.

Le document EP2059714 décrit un assemblage de panneaux dans lequel la liaison entre deux panneaux adjacents est rendue étanche par un joint d'étanchéité comportant une partie centrale logée dans un interstice ménagé entre les deux panneaux et une partie externe dirigée vers l'extérieur de l'assemblage de panneaux. Ce joint est apte à recouvrir au moins partiellement la face externe des deux rebords longitudinaux des panneaux bordant l'interstice.

Il est donc nécessaire de trouver un arrangement différent qui permet de résoudre les inconvénients précités.

### EXPOSE DE L'INVENTION

Un objet de la présente invention est de proposer un assemblage selon la revendication 1

Un tel assemblage peut être facilement mis en oeuvre et même si un panneau doit être remplacé, il n'est pas nécessaire de refaire l'étanchéité.

Avantageusement, la fixation des panneaux à la structure est réalisée par des éléments de visserie à travers la lame souple.

Selon un mode de réalisation particulier, pour ledit au moins un bord, le cordon élastomère est fixé le long dudit au moins un bord.

Avantageusement, chaque cordon élastomère est décentré par rapport à la lame souple.

Selon l'invention, pour ledit au moins un bord, le cordon élastomère est fixé à la surface intérieure du panneau en regard.

Pour ledit au moins un bord, la lame souple porte un réceptacle dans lequel loge le cordon élastomère correspondant.

Selon un mode de réalisation particulier, la lame souple est intégrée à la structure.

Selon un mode de réalisation particulier, l'assemblage comporte un joint qui est disposé entre la structure et la lame souple et qui assure la fixation de la lame souple à la structure et l'étanchéité entre la lame souple et la structure.

L'invention propose également un procédé de réalisation d'un assemblage selon le dernier mode de réalisation et qui comporte :
- une étape de préparation au cours de laquelle des cordons de joint sont déposés sur la structure ou la lame souple,
- une étape d'accostage au cours de laquelle la lame souple est appliquée contre la structure en comprimant les cordons de joint,
- une étape de polymérisation au cours de laquelle les cordons de joint ainsi comprimés sont polymérisés,
- une première étape d'assemblage au cours de laquelle les cordons élastomères sont fixés au panneau destiné à être en regard dudit au moins un bord, et
- une deuxième étape d'assemblage au cours de laquelle les panneaux sont fixés à la structure en prenant le joint et la lame souple en sandwich.

Avantageusement, à l'issue de l'étape de polymérisation, le procédé comporte une étape au cours de laquelle le joint en excès est retiré.

L'invention propose également un aéronef comportant une structure et des panneaux formant un assemblage selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un assemblage selon l'invention,
[Fig. 2] est une vue de face d'un assemblage selon un premier mode de réalisation non revendiqué,
[Fig. 3] est une représentation schématique des étapes d'un procédé de réalisation d'un assemblage selon un deuxième mode de réalisation non revendiqué,
[Fig. 4] est une vue de face d'une lame et de cordons élastomères selon un mode de réalisation particulier non revendiqué,
[Fig. 5] est une représentation schématique d'une étape d'un procédé de réalisation d'un assemblage selon un troisième mode de réalisation non revendiqué,
[Fig. 6] est une représentation schématique d'une étape d'un procédé de réalisation d'un assemblage selon un quatrième mode de réalisation selon l'invention, et
[Fig. 7] est une représentation schématique des étapes d'un procédé de réalisation d'un assemblage selon l'état de la technique.

### EXPOSE DETAILLE DE MODES DE REALISATION

La présente invention est expliquée dans le cadre d'un aéronef, mais elle peut s'appliquer à tout assemblage comportant une structure et deux panneaux fixés à la structure.

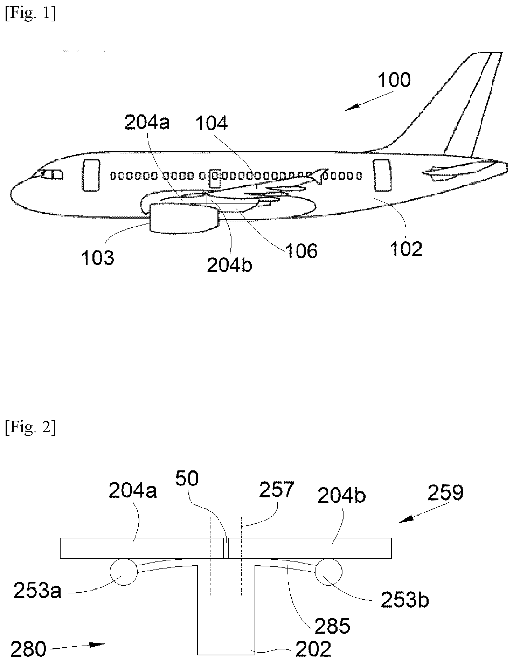

La Fig. 1 montre un aéronef 100 qui comporte un fuselage 102 de chaque côté duquel est fixée une aile 104 qui porte au moins un réacteur 103. Le réacteur 103 est fixé à l'aile 104 par un mât réacteur 106.

L'aéronef 100 comporte une structure sur laquelle est fixée une pluralité de panneaux qui sont jointifs les uns avec les autres et dont l'étanchéité le long des bords des panneaux doit être assurée. L'aéronef 100 comporte une structure et deux panneaux qui forment un assemblage selon l'invention et décrit ci-dessous.

Dans le mode de réalisation de l'invention présenté à la Fig. 1, les panneaux 204a-b sont disposés au niveau du mât réacteur 106, mais ils peuvent être disposés à d'autres endroits de l'aéronef 100.

La Fig. 2 montre un assemblage 280 selon un premier mode de réalisation non revendiqué qui comporte la structure 202 et les deux panneaux 204a-b qui sont jointifs le long d'une ligne de contact 50. La ligne de contact 50 s'étend le long de la structure 202.

L'assemblage 280 comporte une lame souple 285 qui est intégrée à la structure 202 et monomatière avec elle et dont chaque bord parallèle à la ligne de contact 50 porte un cordon élastomère 253a-b. La lame souple 285 est une extension de la structure 202 et les bords de la lame souple 285 s'étendent de part et d'autre de la ligne de contact 50 et de la structure 202. Ainsi, chaque cordon élastomère 253a-b est en appui contre une surface intérieure d'un des deux panneaux 204a-b. Les bords de la lame souple 285 s'étendent au moins sur la longueur de la ligne de contact 50 afin d'étanchéifier l'assemblage 280 le long de ladite ligne de contact 50. La face intérieure est la face orientée vers la structure 202 contre laquelle s'appuient les cordons élastomères 253a-b.

Les panneaux 204a-b sont fixés à la structure 202 en prenant la lame souple 285 en sandwich.

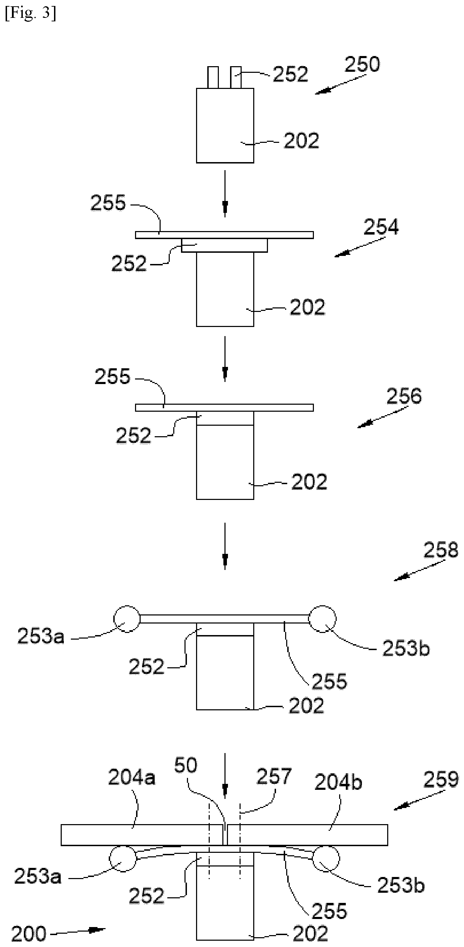

La Fig. 3 montre un procédé de réalisation d'un assemblage 200 selon un deuxième mode de réalisation non revendiqué et qui comporte la structure 202 et les deux panneaux 204a-b qui sont jointifs le long d'une ligne de contact 50. La ligne de contact 50 s'étend le long de la structure 202.

L'assemblage 200 comporte une lame souple 255 dont chaque bord parallèle à la ligne de contact 50 porte un cordon élastomère 253a-b. La lame souple 255 est fixée à la structure 202 par l'intermédiaire d'un joint 252 entre la structure 202 et les panneaux 204a-b et les bords de la lame souple 255 s'étendent de part et d'autre de la ligne de contact 50 et de la structure 202. Ainsi, chaque cordon élastomère 253a-b est en appui contre une surface intérieure d'un des deux panneaux 204a-b. Les bords de la lame souple 255 s'étendent au moins sur la longueur de la ligne de contact 50 afin d'étanchéifier l'assemblage 200 le long de ladite ligne de contact 50. La face intérieure est la face orientée vers la structure 202 contre laquelle s'appuient les cordons élastomères 253a-b. En outre, le joint 252 assure également l'étanchéité entre la lame souple 255 et la structure 202. Lors de l'assemblage, le joint 252 peut être déposé sur la structure 202 ou sur la lame souple 255.

Dans les deux modes de réalisation, la lame souple 255, 285 est solidaire de la structure 202, mais dans le deuxième mode de réalisation, la lame souple 255 n'est pas une partie intégrante de la structure 202 mais un élément rapporté.

Les panneaux 204a-b sont fixés à la structure 202 à travers la lame souple 255, 285 par des éléments de visserie 257 comme par exemple des vis, rivets, etc.

La lame souple 255, 285 est réalisée par exemple en métal, en élastomère avec des fibres, etc. Lorsqu'elle est déformée, la lame souple 255, 285 doit pouvoir exercer un effort contraire qui tend à compenser la déformation et revenir à son état initial lorsqu'elle n'est plus soumise à la déformation.

Chaque cordon élastomère 253a-b est suffisamment épais pour venir en appui contre la surface intérieure du panneau 204a-b en regard duquel il est disposé.

La lame souple 255, 285 se positionne ainsi sous les panneaux 204a-b et il est alors possible de démonter les panneaux 204a-b sans retirer la lame souple 255, 285 et sans détériorer le joint 252 lorsque celui-ci est présent. Dans ce dernier cas, le joint 252 reste entre la lame souple 255 et la structure 202, et il n'est alors pas nécessaire de remettre du joint 252 lorsque le panneau 204a-b est remis en place. En particulier, lorsque l'un des panneaux 204a-b doit être démonté, la lame souple 255, 285 reste solidaire de la structure 202 et ainsi, les panneaux 204a-b peuvent être librement démontés et remontés sans risque de dégradation de l'étanchéité et sans qu'il soit nécessaire de refaire l'étanchéité.

En outre, en cas de déformation des panneaux 204a-b, par exemple en vol dans le cas d'un aéronef, la lame souple 255, 285 compense les déformations et les cordons élastomères 253a-b restent appliqués contre les surfaces intérieures des panneaux 204a-b assurant l'étanchéité.

En outre, la lame souple 255, 285 permet de compenser les irrégularités de surface des panneaux 204a-b dues aux tolérances de fabrication des panneaux 204a-b.

Le système d'étanchéité comporte alors la lame souple 255, 285 et les cordons élastomères 253a-b qui peuvent se présenter par exemple sous la forme d'un profilé linéaire.

Dans les modes de réalisation des Figs. 2 à 4, les cordons élastomères 253a-b sont fixés le long des bords de la lame souple 255, 285, mais ils peuvent également être décalés vers l'intérieur de la lame souple 255, 285.

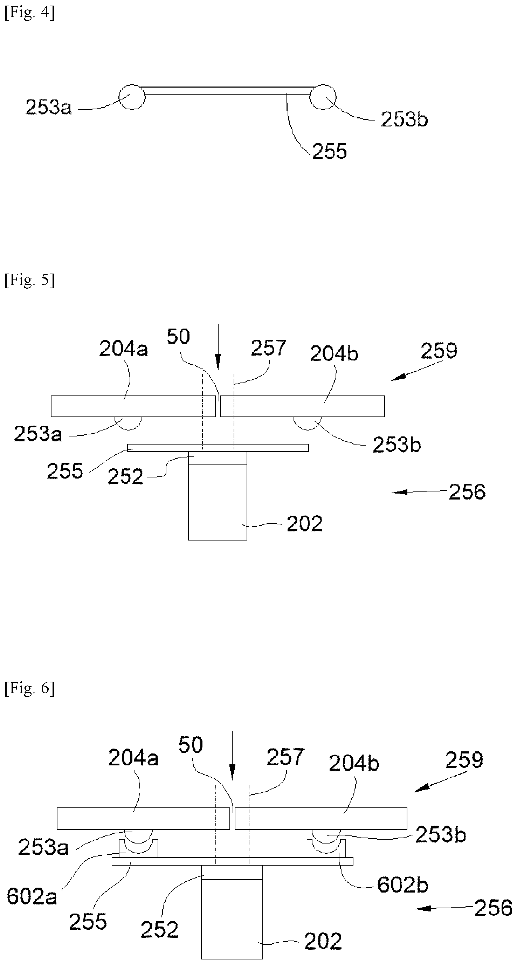

Dans le mode de réalisation de la Fig. 2 et de la Fig. 3, les cordons élastomères 253a-b sont centrés par rapport à la lame souple 255, 285, mais afin de limiter la flexion de la lame souple 255, 285 tout en conservant des cordons élastomères 253a-b relativement épais, la position de chaque cordon élastomère 253a-b par rapport à la lame souple 255, 285 peut être décentrée comme le montre la Fig. 4.

La Fig. 5 montre un mode de réalisation non revendiqué pour lequel le cordon élastomère 253a-b est fixé à la surface intérieure du panneau 204a-b pour lequel l'étanchéité est requise et qui est en regard de la lame souple 255, 285. Ce mode de réalisation s'applique également au cas de la Fig. 2.

Le cordon élastomère 253a-b est ainsi fixé en regard de la lame souple 255, 285 et lorsque les panneaux 204a-b sont fixés à la structure 202 en prenant la lame souple 255, 285 en sandwich, ledit ou chaque cordon élastomère 253a-b est également pris en sandwich entre la lame souple 255, 285 et la surface intérieure du panneau 204a-b qui est en regard.

Dans le mode de réalisation de la Fig. 6 selon l'invention, le cordon élastomère 253a-b est fixé à la surface intérieure du panneau 204a-b et pour chaque cordon élastomère 253a-b, la lame souple 255, 285 porte un réceptacle 602a-b dans lequel loge le cordon élastomère 253a-b correspondant.

Les Figs. 5 et 6 montrent des étapes pour lesquelles le rapprochement des panneaux 204a-b et de la lame souple 255 n'est pas encore réalisé.

Les cordons élastomères 253a-b sont fixés à la lame souple 255, 285 ou au panneau 204a-b selon les techniques connues de l'homme du métier, comme par exemple le collage, le rivetage, etc.

Dans chacun des modes de réalisation présentés ici, il y a un cordon élastomère 253a-b de chaque côté de la ligne de contact 50, mais il peut arriver que l'étanchéité sous l'un des panneaux 204a-b n'est pas requise, et alors le cordon élastomère 253a-b correspondant à ce panneau 204a-b peut être absent. Il y a alors un seul cordon élastomère 253a-b qui est en appui contre la surface intérieure du panneau 204a-b qui est en regard et au niveau duquel l'étanchéité doit être assurée.

Ainsi, d'une manière générale, l'assemblage 200, 280 comporte la structure 202, les deux panneaux 204a-b jointifs le long d'une ligne de contact 50 qui s'étend le long de la structure 202, la lame souple 255, 285 solidaire de la structure 202 où au moins un bord de la lame souple 255, 285 s'étend en regard de l'un des panneaux 204a-b, et pour ledit au moins un bord, un cordon élastomère 253a-b fixé à la lame souple 255, 285 ou au panneau 204a-b en regard dudit au moins un bord, où les panneaux 204a-b sont fixés à la structure 202 en prenant la lame souple 255, 285 en sandwich et où ledit ou chaque cordon élastomère 253a-b est pris en sandwich entre la lame souple 255, 285 et la surface intérieure du panneau 204a-b en regard.

Le procédé comporte :
- une étape de préparation 250 au cours de laquelle des cordons de joint 252 sont déposés sur la structure 202 ou la lame souple 255,
- une étape d'accostage 254 au cours de laquelle la lame souple 255 est appliquée contre la structure 202 en comprimant les cordons de joint 252,
- une étape de polymérisation 256 au cours de laquelle les cordons de joint 252 ainsi comprimés sont polymérisés,
- une première étape d'assemblage 258 au cours de laquelle les cordons élastomères 253a-b sont fixés à la lame souple 255 ou au panneau 204a-b destiné à être en regard d'un bord de la lame souple 255, et
- une deuxième étape d'assemblage 259 au cours de laquelle les panneaux 204a-b sont fixés à la structure 202 en prenant le joint 252 et la lame souple 255 en sandwich.

Lors de l'étape de préparation 250, les cordons de joint 252 sont déposés sur la structure 202 ou sur la lame souple 255 dans une position qui se trouve en regard de la ligne de contact 50 lorsque les panneaux 204a-b sont fixés.

Lors de l'étape d'accostage, les bords de la lame souple 255 seront positionnés de part et d'autre de la structure 202 lorsqu'un cordon de joint 252 est prévu de part et d'autre de la ligne de contact 50.

Le joint est par exemple un joint silicone, de la colle, une mousse.

Avec un tel procédé, l'étape de polymérisation est effectuée sans que les panneaux 204a-b soient présents, ce qui assure une meilleure accessibilité. En outre, le risque d'endommagement des panneaux est réduit car ils ne sont pas utilisés pour conformer le joint.

En outre, le système d'étanchéité peut être installé en avance de phase par rapport à la mise en place des panneaux.

Le risque de grippage est réduit puisque les panneaux ne sont installés qu'une seule fois et le couple de serrage appliqué à chaque panneau n'influe plus sur l'écrasement du joint. L'accès à la zone n'est plus fermé lors de la mise en place du système d'étanchéité.

A l'issue de l'étape de polymérisation 256, le procédé peut comporter une étape au cours de laquelle le joint 252 en excès est retiré.

## Revendications

1. Assemblage (200, 280) comportant :
- une structure (202),
- deux panneaux (204a-b) jointifs le long d'une ligne de contact (50) qui s'étend le long de la structure (202),
- une lame souple plane (255, 285) solidaire de la structure (202) où au moins un bord de la lame souple (255, 285) s'étend en regard de l'un des panneaux (204a-b), et
- pour ledit au moins un bord, un cordon élastomère (253a-b) fixé à la lame souple (255, 285) ou au panneau (204a-b) en regard dudit au moins un bord,
où les panneaux (204a-b) sont fixés à la structure (202) en prenant la lame souple (255, 285) en sandwich et où ledit ou chaque cordon élastomère (253a-b) est pris en sandwich entre la lame souple (255, 285) et une surface intérieure du panneau (204a-b) en regard,
ledit assemblage étant **caractérisé en ce que**, pour ledit au moins un bord, le cordon en élastomère (253a-b) est fixé à la surface intérieure du panneau (204a-b) en regard, ladite lame souple (255, 285) portant un réceptacle (602a-b) dans lequel loge le cordon élastomère (253a-b) correspondant.

2. Assemblage (200, 280) selon la revendication 1, **caractérisé en ce que** la fixation des panneaux (204a-b) à la structure (202) est réalisée par des éléments de visserie (257) à travers la lame souple (255).

3. Assemblage (200, 280) selon l'une des revendications 1 ou 2, **caractérisé en ce que**, pour ledit au moins un bord, le cordon élastomère (253a-b) est fixé le long dudit au moins un bord.

4. Assemblage (200, 280) selon la revendication 3, **caractérisé en ce que** le cordon élastomère (253a-b) est décentré par rapport à la lame souple (255, 285).

5. Assemblage (280) selon l'une des revendications 1 à 4, **caractérisé en ce que** la lame souple (285) est intégrée à la structure (202).

6. Assemblage (200) selon l'une des revendications 1 à 4, **caractérisé en ce qu'**il comporte un joint (252) qui est disposé entre la structure (202) et la lame souple (255) et qui assure la fixation de la lame souple (255) à la structure (202) et l'étanchéité entre la lame souple (255) et la structure (202).

7. Procédé de réalisation d'un assemblage (200) selon la revendication 6, **caractérisé en ce qu'**il comporte :
- une étape de préparation (250) au cours de laquelle des cordons de joint (252) sont déposés sur la structure (202) ou la lame souple (255),
- une étape d'accostage (254) au cours de laquelle la lame souple (255) est appliquée contre la structure (202) en comprimant les cordons de joint (252),
- une étape de polymérisation (256) au cours de laquelle les cordons de joint (252) ainsi comprimés sont polymérisés,
- une première étape d'assemblage (258) au cours de laquelle les cordons élastomères (253a-b) sont fixés au panneau (204a-b) destiné à être en regard dudit au moins un bord, et
- une deuxième étape d'assemblage (259) au cours de laquelle les panneaux (204a-b) sont fixés à la structure (202) en prenant le joint (252) et la lame souple (255) en sandwich.

8. Procédé selon la revendication 7, **caractérisé en ce qu'**à l'issue de l'étape de polymérisation (256), le procédé comporte une étape au cours de laquelle le joint (252) en excès est retiré.

9. Aéronef (100) comportant une structure (202) et des panneaux (204a-b) formant un assemblage (200) selon l'une des revendications 1 à 6.

## Patentansprüche

1. Baugruppe (200, 280), die Folgendes umfasst:
- eine Struktur (202),
- zwei Platten (204a-b), die entlang einer Kontaktlinie (50), die sich entlang der Struktur (202) erstreckt, aneinander liegen,
- einen ebenen biegsamen Streifen (255, 285), der mit der Struktur (202) fest verbunden ist, wobei sich mindestens ein Rand des biegsamen Streifens (255, 285) gegenüber einer der Platten (204a-b) erstreckt, und
- für den mindestens einen Rand, eine Elastomerschnur (253a-b), die an dem biegsamen Streifen (255, 285) oder an der Platte (204a-b) gegenüber dem mindestens einen Rand befestigt ist,
wobei die Platten (204a-b) so an der Struktur (202) befestigt sind, dass sie den biegsamen Streifen (255, 285) einklemmen, und wobei die oder jede Elastomerschnur (253a-b) zwischen dem biegsamen Streifen (255, 285) und einer Innenoberfläche der gegenüberliegenden Platte (204a-b) eingeklemmt ist,
wobei die Baugruppe **dadurch gekennzeichnet ist, dass**, für den mindestens einen Rand, die Schnur aus Elastomer (253a-b) an der Innenoberfläche der gegenüberliegenden Platte (204a-b) befestigt ist, wobei der biegsame Streifen (255, 285) eine Aufnahme (602a-b) trägt, in der die entsprechende Elastomerschnur (253a-b) aufgenommen ist.

2. Baugruppe (200, 280) nach Anspruch 1, **dadurch gekennzeichnet, dass** die Befestigung der Platten (204ab) an der Struktur (202) durch Schraubenelemente (257) durch den biegsamen Streifen (255) hindurch erfolgt.

3. Baugruppe (200, 280) nach einem der Ansprüche 1 oder 2, **dadurch gekennzeichnet, dass**, für den mindestens einen Rand, die Elastomerschnur (253a-b) entlang des mindestens einen Rands befestigt ist.

4. Baugruppe (200, 280) nach Anspruch 3, **dadurch gekennzeichnet, dass** die Elastomerschnur (253a-b) in Bezug auf den biegsamen Streifen (255, 285) dezentriert ist.

5. Baugruppe (280) nach einem der Ansprüche 1 bis 4, **dadurch gekennzeichnet, dass** der biegsame Streifen (285) in die Struktur (202) integriert ist.

6. Baugruppe (200) nach einem der Ansprüche 1 bis 4, **dadurch gekennzeichnet, dass** sie eine Dichtung (252) umfasst, die zwischen der Struktur (202) und dem biegsamen Streifen (255) angeordnet ist und die Befestigung des biegsamen Streifens (255) an der Struktur (202) und die Dichtheit zwischen dem biegsamen Streifen (255) und der Struktur (202) gewährleistest.

7. Verfahren zur Herstellung einer Baugruppe (200) nach Anspruch 6, **dadurch gekennzeichnet, dass** es Folgendes umfasst:
- einen Vorbereitungsschritt (250), während dessen Dichtungsschnüre (252) auf die Struktur (202) oder den biegsamen Streifen (255) aufgebracht werden,
- einen Schritt des Aneinanderfügens (254), während dessen der biegsame Streifen (255) gegen die Struktur (202) gedrückt wird und dabei die Dichtungsschnüre (252) komprimiert,
- einen Polymerisationsschritt (256), während dessen die so komprimierten Dichtungsschnüre (252) polymerisiert werden,
- einen ersten Montageschritt (258), während dessen die Elastomerschnüre (253a-b) an der Platte (204a-b), die dazu bestimmt ist, sich gegenüber dem mindestens einen Rand zu befinden, befestigt werden, und
- einen zweiten Montageschritt (259), während dessen die Platten (204a-b) an der Struktur (202) befestigt werden und dabei die Dichtung (252) und den biegsamen Streifen (255) einklemmen.

8. Verfahren nach Anspruch 7, **dadurch gekennzeichnet, dass** nach Abschluss des Polymerisationsschritts (256) das Verfahren einen Schritt umfasst, während dessen die überschüssige Dichtung (252) entfernt wird.

9. Luftfahrzeug (100), das eine Struktur (202) und Platten (204a-b) umfasst, die eine Baugruppe (200) nach einem der Ansprüche 1 bis 6 bilden.

## Claims

1. Assembly (200, 280) comprising:
- a structure (202),
- two panels (204a-b) contiguous along a line of contact (50) which extends along the structure (202),
- a planar flexible blade (255, 285) secured to the structure (202), wherein at least one edge of the flexible blade (255, 285) extends opposite one of the panels (204a-b), and
- for said at least one edge, an elastomer bead (253a-b) fastened to the flexible blade (255, 285) or to the panel (204a-b) opposite said at least one edge,
wherein the panels (204a-b) are fastened to the structure (202) while sandwiching the flexible blade (255, 285), and wherein said or each elastomer bead (253a-b) is sandwiched between the flexible blade (255, 285) and an opposite inner surface of the panel (204a-b),
said assembly being **characterized in that**, for said at least one edge, the elastomer bead (253a-b) is fastened to the opposite inner surface of the panel (204a-b), said flexible blade (255, 285) bearing a receptacle (602a-b) in which the corresponding elastomer bead (253a-b) is accommodated.

2. Assembly (200, 280) according to Claim 1, **characterized in that** the panels (204a-b) are fastened to the structure (202) by means of screwing elements (257) screwed through the flexible blade (255).

3. Assembly (200, 280) according to either of Claims 1 and 2, **characterized in that**, for said at least one edge, the elastomer bead (253a-b) is fastened along said at least one edge.

4. Assembly (200, 280) according to Claim 3, **characterized in that** the elastomer bead (253a-b) is off-centre with respect to the flexible blade (255, 285).

5. Assembly (280) according to one of Claims 1 to 4, **characterized in that** the flexible blade (285) is integrated into the structure (202).

6. Assembly (200) according to one of Claims 1 to 4, **characterized in that** it comprises a seal (252) which is arranged between the structure (202) and the flexible blade (255) and which serves to fasten the flexible blade (255) to the structure (202) and to provide sealing between the flexible blade (255) and the structure (202).

7. Method for producing an assembly (200) according to Claim 6, **characterized in that** it comprises:
- a preparation step (250) during which seal (252) beads are deposited on the structure (202) or the flexible blade (255),
- a docking step (254) during which the flexible blade (255) is applied against the structure (202) while compressing the seal (252) beads,
- a polymerization step (256) during which the thus compressed seal (252) beads are polymerized,
- a first assembly step (258) during which the elastomer beads (253a-b) are fastened to the panel (204a-b) intended to be opposite said at least one edge, and
- a second assembly step (259) during which the panels (204a-b) are fastened to the structure (202) while sandwiching the seal (252) and the flexible blade (255).

8. Method according to Claim 7, **characterized in that**, at the end of the polymerization step (256), the method comprises a step during which the excess seal (252) is removed.

9. Aircraft (100) comprising a structure (202) and panels (204a-b) forming an assembly (200) according to one of Claims 1 to 6.
